# FASCICULE DE BREVET EUROPEEN

(11) **EP 4 373 343 B1**
(45) Date de publication et mention de la délivrance du brevet: **18.06.2025**
(21) Numéro de dépôt: 22747006.9
(22) Date de dépôt: 07.07.2022
(51) Int. Cl.: A41D 13/11, B01D 39/16, B32B 5/02, B32B 5/26

(54) **MASQUE ET PROCÉDÉ DE FABRICATION DE MASQUES**
MASKE UND VERFAHREN ZUR HERSTELLUNG DER MASKE
MASK AND METHOD FOR PRODUCING MASKS

(30) Priorité: 22.07.2021 FR 2107970
(43) Date de publication de la demande: 29.05.2024
(73) Titulaire: Appcell, 49070 Beaucouze (FR)
(72) Inventeur: BILLIARD, Matthieu, 49170 Béhuard (FR); BILLIARD, Jean-Pierre, 49100 Angers (FR); MÉNORET, Denis, 49170 Saint Martin du Fouilloux (FR); CHEVALIER, Hubert, 49320 Les Garennes sur Loire (FR); JUNG, Frédéric, 49000 Angers (FR)
(74) Mandataire: Loyer & Abello
(86) Numéro de dépôt international: PCT/EP2022/069007
(87) Numéro de publication internationale: WO 2023/001582

(56) Documents cités:
- CN-A- 112 075 687
- FR-A3- 2 792 845
- KR-A- 20200 137 795

## Description

### Domaine technique

L'invention se rapporte au domaine des masques de protection faciaux et de la fabrication de masques.

Un tel masque de protection vise à protéger son porteur contre l'inhalation d'agents pathogènes, tels que des virus ou bactéries, poussières ou gaz nocifs et/ou à protéger les tiers des agents pathogènes susceptibles d'être expirés par son porteur.

### Arrière-plan technologique

Dans l'état de la technique, il est connu des procédés de fabrication de masques. Le document US2008035153 divulgue par exemple un procédé de fabrication de rouleau de masques dans lequel une ou plusieurs pièces de tissus sont superposées puis fixées afin de préformer une partie du masque. Le masque est ensuite prédécoupé puis enroulé afin de former un rouleau. Toutefois, ce type de procédé entraine une perte de quantité importante de matériau, principalement au niveau des espaces séparant deux masques adjacents. En outre, un tel procédé de fabrication de masques ne permet pas d'adapter les matériaux utilisés en fonction des zones du masque.

Ainsi, il existe un réel besoin de produire de manière simple, en très grande quantité et à faible coûts des masques de protection, notamment dans un contexte de crise sanitaire de vaste ampleur.

Le document KR20200137795A divulgue un masque. Le document CN112075687A divulgue un procédé de fabrication d'un masque.

### Résumé

Une idée à la base de l'invention est de proposer un procédé de fabrication de masques qui soit simple à mettre en œuvre, peu couteux et autorise des vitesses de production importantes.

Certain aspect de l'invention se rapporte à un procédé de fabrication de masques qui est fiable et répétable.

Certain aspect de l'invention se rapporte à un procédé de fabrication de masques permettant de diminuer les déchets résiduels de matériaux utilisés durant la fabrication de masques.

Une autre idée à la base de l'invention est de proposer un masque optimisé pour l'utilisateur, c'est-à-dire que lorsqu'il est en position d'utilisation sur le visage, le masque reste en position et couvre le nez et la bouche. En outre, le masque est confortable pour l'utilisateur, c'est-à-dire qu'il ne tire pas trop sur les oreilles de l'utilisateur et n'irrite pas l'arrière des oreilles.

Selon un mode de réalisation, l'invention fournit un procédé de fabrication de masques comprenant:
- fournir un premier et un deuxième assemblages de bandes superposés l'un sur l'autre, le premier assemblage de bandes comportant une première bande de matériau filtrant, une deuxième bande de matériau filtrant et une première bande élastique interposée entre la première bande de matériau filtrant et la deuxième bande de matériau filtrant ; le deuxième assemblage de bandes comportant une troisième bande de matériau filtrant, une quatrième bande de matériau filtrant et une deuxième bande élastique interposée entre la troisième bande de matériau filtrant et la quatrième bande de matériau filtrant, la première bande de matériau filtrant, la deuxième bande de matériau filtrant et la première bande élastique étant respectivement superposées sur la quatrième bande de matériau filtrant, la troisième bande de matériau filtrant et la deuxième bande élastique ; puis
- fixer la première bande de matériau filtrant à la quatrième bande de matériau filtrant le long d'une première ligne de soudure ;
- fixer la deuxième bande de matériau filtrant à la troisième bande de matériau filtrant le long d'une deuxième ligne de soudure ; puis
- une étape de découpe des premier et deuxième assemblages de bandes afin de former, en position tête-bêche, un premier masque et un deuxième masque présentant respectivement une ligne médiane correspondant à la première ligne de soudure et à la deuxième ligne de soudure et des orifices destinés à recevoir les oreilles de l'utilisateur.

Grâce à ces caractéristiques, les masques sont fabriqués d'un seul tenant, une étape ultérieure d'ajout de fils élastiques destinés à recevoir les oreilles de l'utilisateur n'est pas nécessaire. En outre, la découpe en position tête-bêche permet de limiter les chutes de matériau, limitant ainsi les déchets générés par le procédé de fabrication de masques.

Selon des modes de réalisation, le premier et le deuxième assemblage de bandes superposés l'un sur l'autre sont formés à partir d'un assemblage de cinq bandes comportant la première bande de matériau filtrant, une bande centrale matériau filtrant destinée à former la deuxième bande de matériau filtrant et la troisième bande de matériau filtrant, la quatrième bande de matériau filtrant, la première bande élastique interposée entre la première bande de matériau filtrant et la bande centrale de matériau filtrant et, la deuxième bande élastique interposée entre la quatrième bande de matériau filtrant et la bande centrale de matériau filtrant, dans lequel l'assemblage de cinq bandes est plié le long du centre de la bande centrale de matériau filtrant afin de former ladite deuxième bande de matériau filtrant et ladite troisième bande de matériau filtrant ainsi que le premier assemblages de bandes et le deuxième assemblages de bandes superposés.

Grâce à ces caractéristiques, le procédé de fabrication de masques est facilement industrialisable. En effet, le pliage au niveau de la bande centrale permet une superposition du premier et du deuxième assemblages de bandes l'un sur l'autre davantage précise, fiable et reproductible.

Selon un mode de réalisation, la bande centrale de matériau filtrant présente une largeur au moins deux fois plus grande que la première bande de matériau filtrant.

Selon un mode de réalisation, le premier et le deuxième assemblage de bandes superposés l'un sur l'autre sont formés à partir de deux assemblages de bandes distincts, le premier assemblage de bandes étant respectivement formé à partir de la première bande de matériau filtrant, de la deuxième bande de matériau filtrant, et de la première bande élastique interposée entre la première bande de matériau filtrant et la deuxième bande de matériau filtrant, dans lequel la première bande de matériau filtrant et la deuxième bande de matériau filtrant sont fixées de part et d'autre de la première bande élastique afin de former ledit premier assemblage de bandes, et le deuxième assemblage de bandes étant respectivement formé à partir de la troisième bande de matériau filtrant, de la quatrième bande de matériau filtrant, et de la deuxième bande élastique interposée entre la troisième bande de matériau filtrant et la quatrième bande de matériau filtrant, dans lequel la troisième bande de matériau filtrant et la quatrième bande de matériau filtrant sont fixées de part et d'autre de la deuxième bande élastique afin de former ledit deuxième assemblage de bandes.

Selon un mode de réalisation, au moins une bande choisie parmi la première bande de matériau filtrant, la deuxième bande de matériau filtrant, la troisième bande de matériau filtrant, la quatrième bande de matériau filtrant, comporte au moins deux couches superposées, préférentiellement trois couches superposées. C'est-à-dire que ladite au moins une bande comporte par exemple deux, trois, quatre ou cinq couches superposées.

Selon un mode de réalisation, la première bande de matériau filtrant, la deuxième bande de matériau filtrant, la troisième bande de matériau filtrant, la quatrième bande de matériau filtrant comporte au moins une couche réalisée dans un matériau intissé, qui est de préférence choisi parmi le polyester, le polypropylène, la viscose, le polyéthylène et le polyamide. Le matériau intissé est par exemple issu d'une production en voie sèche, voie fondue ou voie humide.

Selon un mode de réalisation, les au moins deux couches superposées sont constituées de matériaux identiques ou différents.

Selon un mode de réalisation, les au moins deux couches superposées présentes une épaisseur identique ou différente.

Grâce à ces caractéristiques, il est possible d'obtenir une large gamme de masques répondant à plusieurs critères techniques ou à des normes différentes, notamment des masques alternatifs de catégorie 1 et catégorie 2, des masques de protection respiratoire de type FFP1 filtrant au moins 80 % des aérosols de taille moyenne 0,6 µm, FFP2 filtrant au moins 94 % des aérosols de taille moyenne 0,6 µm, FFP3 filtrant au moins 99 % des aérosols de taille moyenne 0,6 µm, suivant la norme NF EN 149, des masques chirurgicaux de type I efficacité de filtration bactérienne > 95 % d'un aérosol de taille moyenne 3 µm, de type II efficacité de filtration bactérienne > 98 % d'un aérosol de taille moyenne 3 µm, de type IIR efficacité de filtration bactérienne > 98 % d'un aérosol de taille moyenne 3 µm et résistant aux éclaboussures, suivant la norme NF EN 14683 et NF EN 14683+AC. Il est également possible d'obtenir des masques suivant les normes de différents pays, par exemple les normes du *« National Institute for Occupational Safety and Health »* (NIOSH) N95/R95/P95, N99/R99/P99, N100/R100/P100.

Selon un mode de réalisation, au moins une des au moins deux couches superposées contient un antibactériens et/ou un antiviral.

Selon un mode de réalisation, une étape de liaison est effectuée en amont de la découpe des premier et deuxième assemblages de bandes afin de fixer entre-elles les au moins deux couches superposées et de préformer via des zones de liaison, d'une part une première partie latérale et une deuxième partie latérale du premier masque et d'autre part une partie des orifices destinés à recevoir les oreilles de l'utilisateur du deuxième masque.

Grâce à ces caractéristiques, les couches superposées sont maintenues entre-elles.

Selon un mode de réalisation, l'étape de liaison est effectuée par soudage ou par gaufrage. De manière préférée, l'étape de liaison est effectuée par soudage par ultrasons. La soudure par ultrasons permet un assemblage rapide, précis et économique, sans apport de matière et sans avoir recours à des adhésifs supplémentaires. En outre, les zones de liaison obtenues sont solides.

Selon un mode de réalisation, l'étape de liaison est effectuée en amont de l'étape de pliage.

Selon un mode de réalisation, l'étape de liaison est effectuée en amont de la superposition du premier et du deuxième assemblages de bandes.

Grâce à ces caractéristiques, les au moins deux couches superposées sont liées entre-elles sans risquer de lier également les bandes superposées l'une sur l'autre.

Selon un mode de réalisation, la première bande élastique et la deuxième bande élastique présentent une largeur identique.

Selon un mode de réalisation, la première bande élastique et la deuxième bande élastique comportent un matériau élastomère.

Selon un mode de réalisation, la première bande élastique et la deuxième bande élastique comprennent chacune deux nappes de matériau intissé prenant en sandwich le matériau élastomère. Les deux nappes de matériau intissé ne présentent un comportement élastique que selon une direction perpendiculaire à la direction longitudinale des premières et deuxièmes bandes élastiques. Selon un mode de réalisation, les deux nappes de matériau intissé comprennent des ondulations parallèles à la direction longitudinale afin que les deux nappes de matériau intissé autorisent la déformation élastique de la première bande élastique et la deuxième bande élastique uniquement selon une direction perpendiculaire à la direction longitudinale. Selon un mode de réalisation, les deux nappes de matériaux intissés sont soit des matériaux non-tissés qui n'ont pas de capacité d'extension, soit des matériaux non-tissés qui peuvent être étirés dans une direction. Dans le cas des non-tissés non extensibles, il est nécessaire, pour que les première et deuxième bandes élastiques aient des capacités élastiques, de les « activer » en cassant partiellement les fibres ou du moins en diminuant la cohésion selon la direction à rendre extensible. A titre d'exemple, des bandes élastiques, telles que décrites dans le document FR2893036 pourront être utilisées.

Selon un mode de réalisation, la première bande élastique, la deuxième bande élastique comporte un matériau qui est différent de la première bande de matériau filtrant, de la deuxième bande de matériau filtrant, de la troisième bande de matériau filtrant et de la quatrième bande de matériau filtrant.

Selon un mode de réalisation, un rouleau de matériau filtrant fourni une bande principale de matériau filtrant présentant une direction longitudinale, et dans lequel la première bande de matériau filtrant, la bande centrale de matériau filtrant et la quatrième bande de matériau filtrant sont découpées dans la bande principale de matériau filtrant via une étape de découpe selon la direction longitudinale du rouleau de matériau filtrant.

Selon un mode de réalisation, un rouleau de matériau élastique fourni une bande principale de matériau élastique présentant une direction longitudinale et dans lequel la première bande élastique et la deuxième bande élastique sont découpées dans la bande principale de matériau élastique via une étape de découpe selon la direction longitudinale de ladite bande principale de matériau élastique.

Selon un mode de réalisation, la première bande de matériau filtrant et la deuxième bande de matériau filtrant sont fixées de part et d'autre de la première bande élastique par soudage, par exemple par un soudage par ultrason.

Selon un mode de réalisation, la troisième bande de matériau filtrant et la quatrième bande de matériau filtrant sont fixées de part et d'autre de la deuxième bande élastique par soudage, par exemple par un soudage par ultrason.

Selon un mode de réalisation, la fixation de la première bande de matériau filtrant à la quatrième bande de matériau filtrant le long de la première ligne de soudure, et/ou la fixation de la deuxième bande de matériau filtrant à la troisième bande de matériau filtrant le long de la deuxième ligne de soudure, est effectuée par un soudage par ultrason. C'est-à-dire que la première ligne de soudure et/ou la deuxième ligne de soudure est formée par soudage, préférentiellement par ultrason. Selon une variante de réalisation, la première ligne de soudure et/ou la deuxième ligne de soudure est formée par collage ou fusion.

Selon un mode de réalisation, la découpe des premier et deuxième assemblages de bandes est partielle formant ainsi des zones non découpées permettant au premier masque et au deuxième masque d'être liés. Les zones non découpées sont sécables par l'utilisateur afin de détacher le premier masque du deuxième masque sans qu'il soit nécessaire d'utiliser un outil dédié pour la découpe.

Selon un mode de réalisation, les zones non découpées présentent des dimensions de l'ordre du micromètre, préférentiellement entre 10 µm et 500 µm, par exemple 100 µm.

Selon un mode de réalisation, les zones non découpées sont régulièrement espacées entre-elles.

Selon un mode de réalisation, les zones non découpées sont situées sur la première ligne de soudure et la deuxième ligne de soudure.

Selon un mode de réalisation, les zones non découpées sont situées au niveau des jonctions entre la première ligne de soudure ou la deuxième ligne de soudure et les zones de liaison.

Selon un autre mode de réalisation, chacun des premier et deuxième masque est intégralement découpés lors l'étape de découpe, c'est-à-dire que les premier et deuxième masques ne sont pas liés entre eux.

Selon un mode de réalisation, le procédé comprenant en outre une étape d'enroulement du premier masque et du deuxième masque autour d'un axe afin de former un rouleau de masques détachables.

Selon un mode de réalisation, l'étape de découpe du premier masque et du deuxième masque comprend une découpe du contour de la première ligne de soudure, une découpe du contour de la deuxième ligne de soudure, une découpe du contour des zones de liaison, ainsi qu'une découpe des orifices destinés à recevoir les oreilles de l'utilisateur.

Selon un mode de réalisation, l'étape de découpe du premier masque et du deuxième masque est effectuée de manière que la découpe du premier masque permette de découper une partie du deuxième masque adjacent.

Le premier masque et le deuxième masque étant formé en position tête-bêche et étant accolés, il n'y a pas de chutes de matériau entre le premier masque et le deuxième masque.

Selon un mode de réalisation, la découpe de la première ligne de soudure, la découpe de la deuxième ligne de soudure ainsi que la découpe des orifices destinés à recevoir les oreilles de l'utilisateur sont effectuées dans un même temps. Ce mode de réalisation est particulièrement adapté à la formation d'un rouleau de masques détachables car l'enroulement du premier et du deuxième masque autour d'un axe permet de maintenir en tension le premier et le deuxième assemblages de bandes superposés et ainsi répéter les étapes de manière rapide et fiable sans froisser ou endommager le premier et deuxième assemblages de bandes superposés.

Certain aspect de l'invention se rapporte à la fabrication d'une pluralité de masques de manière continue.

Le terme « continue » doit être interprété dans ce document comme permettant de réaliser un procédé dans lequel les étapes s'enchainent et se répètent sans interruption et sans besoin d'intervention systématique d'un agent entre les étapes de fabrications.

Selon un autre aspect, l'invention fournit un masque comprenant :
une première partie latérale comprenant un premier orifice destiné à recevoir une première oreille d'un utilisateur,
une deuxième partie latérale, comprenant un deuxième orifice destiné à recevoir une deuxième oreille de l'utilisateur, et
une partie centrale interposée entre la première partie latérale et la deuxième partie latérale, la partie centrale étant destinée à recouvrir le nez et la bouche de l'utilisateur, la partie centrale présentant une ligne médiane, la partie centrale étant fabriquée à partir de matériau filtrant,
dans lequel la première partie latérale et la seconde partie latérale sont chacune constituées d'une première zone composée d'un matériau élastique et une deuxième zone composée d'un matériau filtrant, dans lequel la première zone est située entre la partie centrale et la deuxième zone, la deuxième zone définissant respectivement une extrémité latérale du masque,
dans lequel, le premier orifice et le deuxième orifice sont chacun situés à cheval entre la première zone et la deuxième zone.

Grâce à ces caractéristiques, la première zone et la deuxième zone agissent en synergie et permettent d'une part de maintenir le masque sur le visage de l'utilisateur, et d'autre part de limiter le risque d'irritation au niveau de l'arrière des oreilles de l'utilisateur causée par le frottement d'un matériau élastique au niveau de l'arrière des l'oreilles de l'utilisateur. Grâce à ces caractéristiques, une partie des forces de traction qui devraient être exercées sur l'arrière des oreilles de l'utilisateur est reportée sur la première zone. Ainsi, le masque est agréable à porter par l'utilisateur.

Selon un mode de réalisation, la partie centrale présente une ligne inférieure destinée à être positionné sous la bouche de l'utilisateur, et une ligne supérieure destinée à être positionnée sur le nez de l'utilisateur.

Selon un mode de réalisation, le masque comprend en outre un pince nez semi-rigide situé à proximité de la ligne supérieure de la partie centrale du masque. Le pince nez est destiné à pincer le nez de l'utilisateur afin de maintenir le masque en position d'utilisation. Le pince nez est fixé par exemple par couture ou collage.

Selon un mode de réalisation, le pince nez présente une forme de tige ou de languette flexible.

Selon un mode de réalisation, le pince nez est fabriqué à partir de matériau choisi parmi : l'aluminium, le plastique ou un autre matériau dont l'angle de courbure peut être ajusté par la main de l'utilisateur.

Selon un mode de réalisation, la première zone s'étend sur toute la hauteur de la première partie latérale et/ou de la seconde partie latérale du masque.

Selon un mode de réalisation, la première zone présente une hauteur comprise entre 6 cm et 12 cm, préférentiellement 9 cm.

Selon un mode de réalisation, la première zone présente une largeur comprise entre 4 cm et 10 cm, préférentiellement 7 cm.

Selon un mode de réalisation, la première zone présente une forme générale rectangulaire dans laquelle une partie du premier orifice et/ou une partie du deuxième orifice est découpée.

Selon un mode de réalisation, la partie du premier orifice et/ou la partie du deuxième orifice est découpée dans la première zone sur une largeur d'au moins 3 cm et préférentiellement sur une largeur de 5 cm.

Selon un mode de réalisation, au moins 50 % du premier orifice et/ou du deuxième orifice est découpé dans la première zone, préférentiellement au moins 70 %, par exemple 80 %. Le reste de l'orifice est découpé dans la deuxième zone.

Selon un mode de réalisation moins de 50 % du premier orifice et/ou du deuxième orifice est découpé dans la deuxième zone, préférentiellement moins de 30 %, par exemple 20%.

Selon un mode de réalisation, le premier orifice et/ou le deuxième orifice est découpé et contenu uniquement dans la première zone et dans la deuxième zone.

Selon un autre aspect de l'invention, l'invention fournit un procédé d'utilisation d'un masque obtenu ci-dessus, dans lequel le masque est positionné sur le visage de l'utilisateur de manière à recouvrir le nez et la bouche de l'utilisateur, le masque étant maintenu en position en engageant les oreilles de l'utilisateur dans les orifices destinés à recevoir les oreilles.

Selon un mode de réalisation, le masque est positionné sur le visage pour une durée inférieure à 10 heures, par exemple entre une heure et cinq heures, préférentiellement durant moins de quatre heures.

Certains aspects de l'invention partent de l'idée de proposer un procédé industrialisable sur des machines industrielles afin répondre au besoin des fabricants de masques et des consommateurs.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] est un schéma comprenant les principales étapes du procédé selon l'invention.
[Fig.2] La [Fig.2] est un schéma fonctionnel vue du dessus, du procédé de fabrication de masques selon un mode de réalisation.
[Fig.3] La [Fig.3] est une vue dépliée de deux assemblages de bandes superposées selon un mode de réalisation.
[Fig.4] La [Fig.4] est une vue d'un assemblage de trois bandes selon un autre mode de réalisation.
[Fig.5] La [Fig.5] est une vue de masques en position tête-bêche après l'étape de découpe selon un mode de réalisation.
[Fig.6] La [Fig.6] est une vue en perspective schématique d'un masque selon un mode de réalisation.

### Description des modes de réalisation

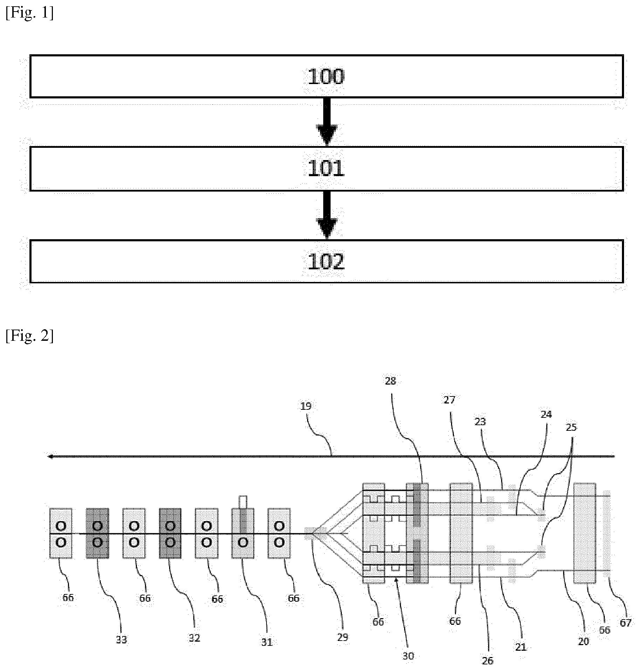

La [Fig.1] présente les principales étapes du procédé de fabrication de masques selon l'invention. Le procédé de fabrication de masques comprend une première étape 100 qui consiste à fournir deux assemblages de bandes superposés l'un sur l'autre, une deuxième étape 101 qui consiste à fixer les deux assemblages de bandes superposés l'un à l'autre et une troisième étape 102 qui consiste à découper les masques en position tête-bêche. Les différentes étapes du procédé de fabrication de masques seront détaillées ci-après.

La [Fig.2] représente schématiquement le procédé de fabrication de masques selon un mode de réalisation. Le sens du déroulement du procédé est représenté par la flèche 19, il s'effectue de droite à gauche et comporte une succession de plusieurs étapes.

La première étape consiste à fournir une bande principale 20 de matériau filtrant présentant une direction longitudinale 19. Cette bande principale 20 est, par exemple, fournie via un rouleau de matériau filtrant. Le matériau filtrant est perméable au gaz afin de permettre à l'utilisateur de respirer correctement.

La seconde étape consiste à former un premier et un deuxième assemblages de bandes superposés. Pour se faire, la bande principale 20 est découpée via des couteaux 25 en trois bandes 21, 24, 23 de matériau filtrant afin de former la première bande 21 de matériau filtrant, la bande centrale 24 destinée à former la deuxième bande de matériau filtrant et la troisième bande de matériau filtrant, et la quatrième bande 23 de matériau filtrant. Les couteaux 25 sont positionnés de manière définir la largeur des bandes 21, 24, 23. La première bande 21 de matériau filtrant et la quatrième bande 23 de matériau filtrant présentent des dimensions identiques et la bande centrale 24 de matériau filtrant présente une largeur supérieure à la première bande de matériau filtrant 21 ou à la quatrième bande 23 de matériau filtrant, par exemple deux fois supérieure.

Une première bande élastique 26 et une deuxième bandes élastiques 27 sont ensuite respectivement positionnées entre la première bande 21 de matériau filtrant et la bande centrale 24 de matériau filtrant et entre la bande centrale 24 de matériau filtrant et la quatrième bande 23 de matériau filtrant. La première bande 21 de matériau filtrant et la bande centrale 24 de matériau filtrant sont fixées de part et d'autre de la première bande élastique 26. De manière similaire, la bande centrale 24 de matériau filtrant et la quatrième bande 23 sont fixées de part et d'autre de la deuxième bande élastique 27. La fixation s'effectue préférentiellement via une soudure par ultrason au niveau d'une zone de soudure 28. Un assemblage de cinq bandes 30 est ainsi formé.

En outre, selon une variante de réalisation, la première bande 21 de matériau filtrant, la bande centrale 24 de matériau filtrant et la quatrième bande 23 de matériau filtrant comporte une pluralité de couches superposées et liés entre-elles par soudure au niveau de la zone de soudure 28. Ce soudage préforme une première partie latérale et une deuxième partie latérale du premier masque et d'autre part une partie des orifices destinés à recevoir les oreilles de l'utilisateur du deuxième masque.

L'étape suivante correspond à une étape de pliage 29 de l'assemblage de cinq bandes 30 le long du centre de la bande centrale 24 de matériau filtrant afin de former la deuxième bande de matériau filtrant et la troisième bande de matériau filtrant ainsi que le premier et le deuxième assemblages de trois bandes superposées (non représenté dans cette figure).

Le premier assemblage de trois bandes ainsi formées présente une première bande de matériau filtrant correspondant à la bande 21 de matériau filtrant, une deuxième bande de matériau filtrant correspondant à la moitié de la bande centrale 24 de matériau filtrant et une première bande élastique correspondant à la bande élastique 26 interposée entre la première bande de matériau filtrant 21 et la bande centrale 24 de matériau filtrant.

Le deuxième assemblage de trois bandes ainsi formées présente une troisième bande de matériau filtrant correspondant à l'autre moitié de la bande centrale 24 de matériau filtrant, une quatrième bande de matériau filtrant correspondant à la quatrième bande 23 de matériau filtrant et une deuxième bande élastique correspondant à la deuxième bande élastique 27 interposée entre l'autre moitié de la bande centrale 24 de matériau filtrant et la quatrième bande 23 de matériau filtrant.

Les deux assemblages de trois bandes superposés sont ensuite fixés l'un à l'autre via une étape de fixation 31, en utilisant par exemple une méthode de soudage par ultrasons. Cette étape permet de fixer la première bande 21 en matériau filtrant du premier assemblage de bandes à la quatrième bande 23 en matériau filtrant du deuxième assemblage de bandes le long d'une première ligne de soudure, décrite de manière détaillée par la suite, et de fixer la deuxième bande en matériau filtrant du premier assemblage de bandes à la troisième bande en matériau filtrant du deuxième assemblage de bandes le long d'une deuxième ligne de soudure, également décrite en détail par la suite.

Ensuite, une première étape de découpe 32 est réalisée via des couteaux afin de former les orifices destinés à recevoir les oreilles de l'utilisateur, les chutes provenant de la découpe des orifices sont retirées. Enfin, une deuxième étape de découpe 33 du contour du masque est effectuée afin de former les masques. Les chutes constituées par le reste de matériau filtrant des bandes de matériau filtrant sont retirées. De manière préférée, les bandes sont maintenues en tension durant tout le procédé de fabrication de masques via des appareils de tension de bandes. Les appareils de tension de bandes permettent un bon déroulement du procédé de fabrication de masques, notamment afin de diminuer les décalages ou les repliements non désirés de la bandes principale 20, de la bande centrale 24 de matériau filtrant, de la première bande 21 de matériau filtrant, de la quatrième bande 23 de matériau filtrant, de l'assemblage de cinq bandes 30 et des deux assemblages de trois bandes superposés durant la fabrication des masques. En outre, de manière préférée, durant le déroulement du procédé de fabrication des masques, la bandes principale 20, la bande centrale 24 de matériau filtrant, la première bande 21 de matériau filtrant, la quatrième bande 23 de matériau filtrant, l'assemblage de cinq bandes 30 puis les deux assemblages de trois bandes superposés sont guidés via un dispositif de guidage de bande 67. Le dispositif de guidage de bandes permet de guider les bandes et d'augmenter la vitesse de production sans diminuer la fiabilité du procédé de fabrication de masques.

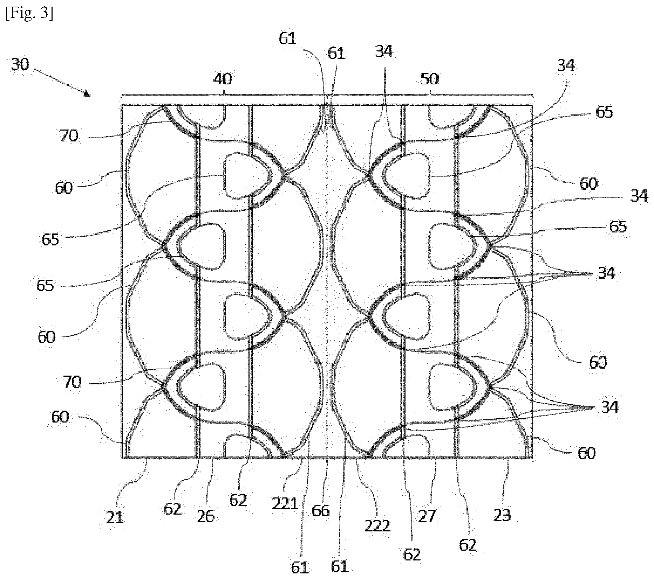

La [Fig.3] est une vue schématique dépliée le long de la ligne de pliure 66 d'une portion de deux assemblages de bandes 40 et 50 superposés avant l'étape de la deuxième découpe 33 du contour du masque selon un mode de réalisation similaire à la [Fig.2]. Si cette [Fig.3] permet de faciliter la compréhension de l'invention, un tel état déplié ne correspond pas à un état réel d'une étape du procédé de fabrication de masques.

Le premier assemblage de bandes 40 est constitué de la première bande 21 de matériau filtrant, de la première bande élastique 26 et de la deuxième bande 221 de matériau filtrant provenant du pliage la bande centrale 24. Le deuxième assemblage de bandes 50 est constitué de la deuxième bande 222 de matériau filtrant provenant du pliage de la bande centrale 24, de la deuxième bande élastique 27 et de la quatrième bande 23 de matériau filtrant. Les bandes adjacentes sont fixées entres-elles par soudure, formant ainsi des zones de soudure 62. Dans ce mode de réalisation, les bandes de matériau filtrant 21, 221, 222, 23 comportent une pluralité de couches superposées. Dans ce mode de réalisation, une étape de liaison de ladite pluralité de couches superposées est effectuée avant l'étape de découpe afin de fixer ladite pluralité de couches superposées entre-elles. Cette étape permet d'éviter que la pluralité de couches superposées soient ballantes à l'issue de l'étape de découpe du masque. En effet, si les couches superposées sont ballantes, cela crée des ouvertures et donc des zones de passages d'air non désirées qui pourraient diminuer la qualité de la filtration de l'air du masque. Ainsi, l'air pourrait passer à travers le masque sans traverser l'ensemble des couches superposées constituant la bande de matériau filtrant. D'autre part, cette étape de liaison forme des zones de liaison 70 qui permettent de préformer les parties latérales des masques ainsi que de préformer une partie des orifices 65 destinés à recevoir les oreilles de l'utilisateur. Selon un mode de réalisation, cette étape de liaison est une étape de soudage, de préférence par ultrasons. De manière alternative, cette étape de liaison peut également être réalisée par un gaufrage à froid.

En outre, la [Fig.3] illustre les premières lignes de soudure 60 et les deuxièmes lignes de soudure 61 formées par la fixation du premier assemblage de bandes 40 avec le deuxième assemblage de bande 50, telles que réalisées pendant l'étape 31 de la [Fig.2]. Ces lignes de soudure 60 et 61 sont respectivement destinées à former la ligne médiane du masque, elles sont de forme sensiblement arquée. La forme des lignes de soudure 60 et 61 et peuvent varier afin de s'adapter au mieux au visage de l'utilisateur.

Les masques adjacents préformés sont en position tête-bêche et accolés l'un à l'autre. Cette disposition est particulièrement avantageuse en ce que l'étape de découpe permet de réaliser dans un même temps la découpe d'une partie latérale d'un premier masque et la découpe d'une partie latérale d'un deuxième masque adjacent au premier masque. Ainsi le procédé de fabrication de masque est efficace et permet de produire des masques en grande quantité tout en diminuant les pertes de matériau.

Selon une variante avantageuse présentée sur la [Fig.3], l'étape de découpe 33 des deux assemblages de trois bandes est partielle formant ainsi des zones non découpées 34 sécables permettant aux masques adjacents d'être liés. Les zones non découpées 34 sont situées préférentiellement sur les zones de soudure 62 et notamment au niveau des jonctions entre les lignes de soudure 60, 61 et zones de liaison 70. Les zones non découpées 34 sont particulièrement avantageuses en ce qu'elles permettent d'assurer une liaison entre les masques adjacents permettant de faciliter leur conditionnement. Cela permet par exemple de réaliser un rouleau de masques détachables ou un lot de masques détachables.

La [Fig.3] illustre la fabrication de quatre masques. Il est également prévu selon un mode de réalisation, la fabrication d'un nombre important de masques, par exemple compris entre deux et mille masques, par exemple 50 ou 100 masques. Pour cela il conviendra d'adapter la longueur du premier assemblage de bandes 40 et du deuxième assemblage de bande 50.

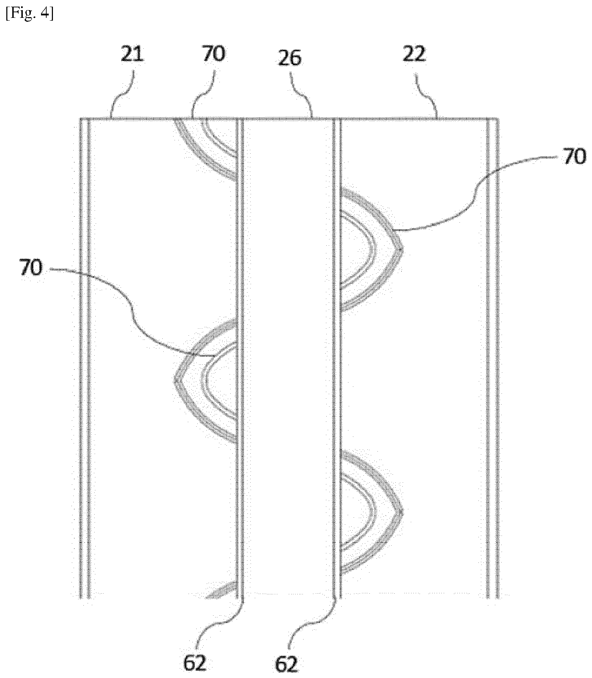

La [Fig.4] présente un autre mode de réalisation et illustre un assemblage de bandes. L'assemblage de bandes est réalisé via la soudure d'une première bande 21 de matériau filtrant et d'une deuxième bande 22 de matériau filtrant de part et d'autre d'une bande élastique 26, formant ainsi deux zones de soudure 62. La première bande 21 de matériau filtrant et la deuxième bande 22 de matériau filtrant comportent chacune une pluralité de couches superposées. Ainsi, de manière similaire au mode de réalisation présenté [Fig.3], une étape de liaison est effectuée afin de lier les couches superposées. L'étape de liaison est par exemple réalisée par soudure par ultrasons et permet de préformer une partie du masque sur les bandes 21 et 22 de matériau filtrant via des zones de liaison 70. Le procédé de fabrication de masque selon un mode de réalisation est effectué en fournissant deux assemblages de trois bandes superposés l'un sur l'autre.

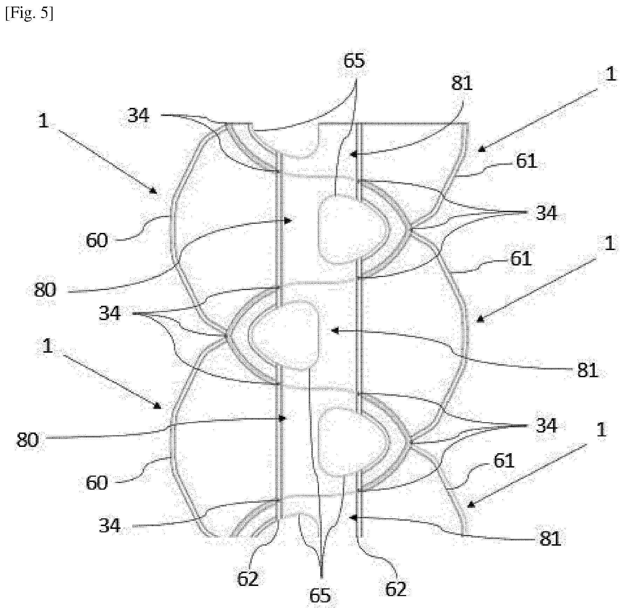

[Fig.5] représente une pluralité de masques 1 adjacents en position tête-bêche qui sont liés les uns aux autres via des zones non découpées 34. Les zones non découpées sont facilement détachables par un utilisateur et ne diminuent pas l'efficacité du masque 1 pour son utilisation. De manière similaire à la [Fig.3], les zones non découpées 34 sont situées sur les zones de soudure 62 et au niveau des jonctions entre les lignes de soudure 60, 61 et zones de liaison 70.

Le masque 1 ainsi obtenu présente deux parties latérales 80 et 81 dont une seule est visible sur chaque masque dans la [Fig.5]. Les deux parties latérales 80 et 81 comprennent chacune un orifice 65, par exemple de forme triangulaire avec des sommets arrondis, destinés à recevoir les oreilles de l'utilisateur.

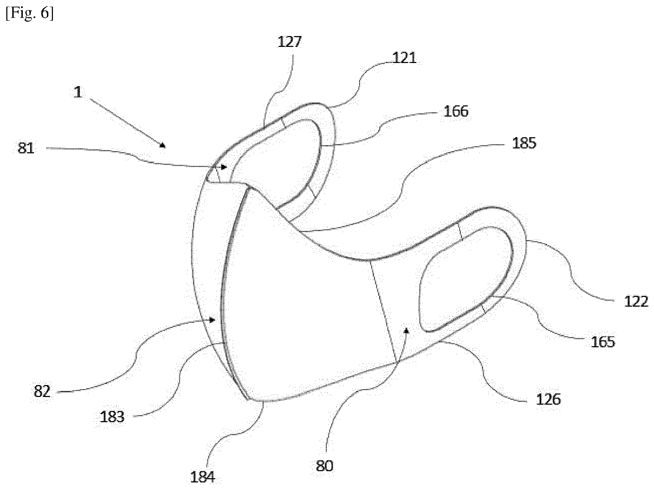

La [Fig.6] décrit un masque 1 selon un mode de réalisation. De manière similaire à la [Fig.5], le masque 1 présente une première partie latérale 80 comprenant un premier orifice 165 et une seconde partie latérale 81 comprenant un deuxième orifice 166. Les orifices 165 et 166 présentent une forme de rectangle avec les bords arrondis. La forme des orifices peut être également ronde, ovale, polygonale ou une autre forme permettant de maintenir le masque convenablement sur l'oreille de l'utilisateur. Le masque 1 comprend une partie centrale 82 située entre lesdites parties latérales 80 et 81. La partie centrale présente une ligne médiane 183. La ligne médiane 183 est formée par la première ligne de soudure 60 ou la deuxième ligne de soudure 61 formées par la fixation décrite notamment dans l'étape 31 de la [Fig.2]. En outre, la partie centrale présente une ligne inférieure 184 destinée à être positionné sous la bouche de l'utilisateur, notamment sous le menton, et une ligne supérieure 185 destinée à être positionnée sur le nez et sous les yeux de l'utilisateur. La première partie latérale 80 est constituée d'une première zone élastique 126 issue d'une bande élastique du procédé de fabrication de masques et une deuxième zone 122 composée d'un matériau filtrant issue d'une bande de matériau filtrant du procédé. De manière similaire à la première partie latérale 80, la deuxième partie latérale 81 est constituée d'une première zone élastique 127 issue d'une autre bande élastique du procédé et une deuxième zone 121 composée d'un matériau filtrant issue d'une autre bande de matériau filtrant du procédé. Les premier et deuxième orifices 165 et 166 sont situés respectivement à cheval entre la première zone 126 et 127 et la deuxième zone 122 et 121.

La première zone élastique 126 de la première partie latérale 80 ou la première zone élastique 127 de la deuxième partie latérale 81 présente une hauteur d'environ 9 cm et une largeur d'environ 7 cm.

Les premières zones élastiques 126 et 127 présentent une forme générale rectangulaire avant découpe dans laquelle une partie des orifices 165 ou 166 est formée.

Dans un mode de réalisation, 60 % de l'orifice 165 ou 166 est découpé dans la première zone élastique 126 ou 127 et 40 % de l'orifice 165 ou 166 est découpé dans la deuxième zone 121 ou 122.

Les dimensions du masque peuvent être modifiées afin de les adapter aux dimensions de la tête de l'utilisateur, par exemple si l'utilisateur est un enfant, un adolescent ou un adulte.

L'objet de l'invention est décrit dans les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de fabrication de masques comprenant :
- fournir un premier et un deuxième assemblages de bandes superposés l'un sur l'autre, **caractérisé en ce que** le premier assemblage de bandes (40) comporte une première bande (21) de matériau filtrant, une deuxième bande (22, 221) de matériau filtrant et une première bande élastique (26) interposée entre la première bande (21) de matériau filtrant et la deuxième bande (22, 221) de matériau filtrant ; le deuxième assemblage de bandes (50) comportant une troisième bande (222) de matériau filtrant, une quatrième bande (23) de matériau filtrant et une deuxième bande élastique (27) interposée entre la troisième bande (222) de matériau filtrant et la quatrième bande (23) de matériau filtrant, la première bande (21) de matériau filtrant, la deuxième bande (22, 221) de matériau filtrant et la première bande élastique (26) étant respectivement superposées sur la quatrième bande (23) de matériau filtrant, la troisième bande (222) de matériau filtrant et la deuxième bande élastique (27) ; puis
- fixer la première bande (21) de matériau filtrant à la quatrième bande (23) de matériau filtrant le long d'une première ligne de soudure (60) ;
- fixer la deuxième bande (22, 221) de matériau filtrant à la troisième bande (222) de matériau filtrant le long d'une deuxième ligne de soudure (61) ; puis
- une étape de découpe des premier et deuxième assemblages de bandes afin de former, en position tête-bêche, un premier masque et un deuxième masque présentant respectivement une ligne médiane (183) correspondant à la première ligne de soudure (60) et à la deuxième ligne de soudure (61) et des orifices (65, 165, 166) destinés à recevoir les oreilles de l'utilisateur.

2. Procédé de fabrication de masques selon la revendication 1, dans lequel le premier et le deuxième assemblage de bandes superposés l'un sur l'autre sont formés à partir d'un assemblage de cinq bandes (30) comportant la première bande (21) de matériau filtrant, une bande centrale (24) de matériau filtrant destinée à former la deuxième bande (22, 221) de matériau filtrant et la troisième bande (222) de matériau filtrant, la quatrième bande (23) de matériau filtrant, la première bande élastique (26) interposée entre la première bande (21) de matériau filtrant et la bande centrale (24) de matériau filtrant et, la deuxième bande élastique (27) interposée entre la quatrième bande (23) de matériau filtrant et la bande centrale (24) de matériau filtrant, dans lequel l'assemblage de cinq bandes (30) est plié le long du centre (66) de la bande centrale (24) de matériau filtrant afin de former ladite deuxième bande (22, 221) de matériau filtrant et ladite troisième bande (222) de matériau filtrant ainsi que le premier assemblages (40) de bandes et le deuxième assemblages (50) de bandes superposés.

3. Procédé de fabrication de masques selon la revendication 2, dans lequel la bande centrale (24) de matériau filtrant présente une largeur au moins deux fois plus grande que la première bande (21) de matériau filtrant.

4. Procédé de fabrication de masques selon la revendication 1, dans lequel le premier et le deuxième assemblage de bandes superposés l'un sur l'autre sont formés à partir de deux assemblages de bandes distincts, le premier assemblage de bandes étant respectivement formé à partir de la première bande (21) de matériau filtrant, de la deuxième bande (22) de matériau filtrant, et de la première bande élastique (26) interposée entre la première bande (21) de matériau filtrant et la deuxième bande (22) de matériau filtrant, dans lequel la première bande (21) de matériau filtrant et la deuxième bande (22) de matériau filtrant sont fixées de part et d'autre de la première bande élastique (26) afin de former ledit premier assemblage de bandes, et le deuxième assemblage de bandes étant respectivement formé à partir de la troisième bande (222) de matériau filtrant, de la quatrième bande (23) de matériau filtrant, et de la deuxième bande élastique (27) interposée entre la troisième bande (222) de matériau filtrant et la quatrième bande (23) de matériau filtrant, dans lequel la troisième bande (222) de matériau filtrant et la quatrième bande (23) de matériau filtrant sont fixées de part et d'autre de la deuxième bande élastique (27) afin de former ledit deuxième assemblage de bandes.

5. Procédé de fabrication de masques selon l'une des revendications 1 à 4, dans lequel au moins une bande choisie parmi la première bande (21) de matériau filtrant, la deuxième bande (22, 221) de matériau filtrant, la troisième bande (222) de matériau filtrant, la quatrième bande (23) de matériau filtrant, comporte au moins deux couches superposées, préférentiellement trois couches superposées.

6. Procédé de fabrication de masques selon la revendication 5, dans lequel une étape de liaison est effectuée en amont de la découpe des premier et deuxième assemblages de bandes afin de fixer entre-elles les au moins deux couches superposées et de préformer via des zones de liaison (70), d'une part une première partie latérale et une deuxième partie latérale du premier masque et d'autre part une partie des orifices (65) destinés à recevoir les oreilles de l'utilisateur du deuxième masque.

7. Procédé de fabrication de masques selon l'une des revendications 1 à 6, dans lequel la première bande élastique (26) et la deuxième bande élastique (27) présentent une largeur identique.

8. Procédé de fabrication de masques selon l'une des revendications 1 à 7, dans lequel la première bande élastique (26) et la deuxième bande élastique (27) comportent un matériau élastomère.

9. Procédé de fabrication de masques selon l'une des revendications 1 à 8, dans lequel un rouleau de matériau filtrant fourni une bande principale (20) de matériau filtrant présentant une direction longitudinale, et dans lequel la première bande (21) de matériau filtrant, la bande centrale (24) de matériau filtrant et la quatrième bande (23) de matériau filtrant sont découpées dans la bande principale (20) de matériau filtrant via une étape de découpe selon la direction longitudinale de la bande principale (20) de matériau filtrant.

10. Procédé de fabrication de masques selon l'une des revendications 1 à 9, dans lequel un rouleau de matériau élastique fourni une bande principale de matériau élastique présentant une direction longitudinale et dans lequel la première bande élastique (26) et la deuxième bande élastique (27) sont découpées dans la bande principale de matériau élastique via une étape de découpe selon la direction longitudinale de ladite bande principale de matériau élastique.

11. Procédé de fabrication de masques selon l'une des revendications précédentes, dans lequel la fixation de la première bande (21) de matériau filtrant à la quatrième bande (23) de matériau filtrant le long de la première ligne de soudure (60), et/ou la fixation de la deuxième bande (22, 221) de matériau filtrant à la troisième bande (222) de matériau filtrant le long de la deuxième ligne de soudure (61), est effectuée par un soudage par ultrason.

12. Procédé de fabrication de masques selon l'une des revendications précédentes, dans lequel la découpe des premier et deuxième assemblages de bandes est partielle formant ainsi des zones non découpées (34) permettant au premier masque et au deuxième masque d'être liés.

13. Procédé de fabrication de masques selon la revendication 12, dans lequel les zones non découpées (34) sont situées sur la première ligne de soudure (60) et la deuxième ligne de soudure (61).

14. Procédé de fabrication de masques selon l'une des revendications 12 à 13, dans lequel les zones non découpées (34) sont situées au niveau des jonctions entre la première ligne de soudure (61) ou la deuxième ligne de soudure (61) et les zones de liaison (70).

15. Procédé de fabrication de masques selon la revendication 12 à 14, le procédé comprenant en outre une étape d'enroulement du premier masque et du deuxième masque autour d'un axe afin de former un rouleau de masques détachables.

16. Masque comprenant :
une première partie latérale (80) comprenant un premier orifice (165) destiné à recevoir une première oreille d'un utilisateur,
une deuxième partie latérale (81), comprenant un deuxième orifice (166) destiné à recevoir une deuxième oreille de l'utilisateur, et
une partie centrale (82) interposée entre la première partie latérale (165) et la deuxième partie latérale (166), la partie centrale (82) étant destinée à recouvrir le nez et la bouche de l'utilisateur, la partie centrale (82) présentant une ligne médiane (183), la partie centrale (82) étant fabriquée à partir de matériau filtrant,
**caractérisé en ce que** la première partie latérale (80) et la seconde partie latérale (81) sont chacune constituées d'une première zone (126, 127) issue d'une bande composée d'un matériau élastique et une deuxième zone (121, 122) issue d'une bande composée d'un matériau filtrant, dans lequel la première zone (126, 127) est située entre la partie centrale (82) et la deuxième zone (121, 122), la deuxième zone (121, 122) définissant respectivement une extrémité latérale du masque (1),
dans lequel, le premier orifice (165) et le deuxième orifice (166) sont chacun découpés dans la première zone et la deuxième zone et situés à cheval entre la première zone (126, 127) et la deuxième zone (122, 121).

## Patentansprüche

1. Verfahren zur Herstellung von Masken, umfassend:
- Bereitstellen einer ersten und einer zweiten übereinander liegenden Anordnung von Streifen, **dadurch gekennzeichnet, dass** die erste Anordnung von Streifen (40) einen ersten Streifen (21) aus filterndem Material, einen zweiten Streifen (22, 221) aus filterndem Material und einen ersten elastischen Streifen (26), der zwischen dem ersten Streifen (21) aus filterndem Material und dem zweiten Streifen (22, 221) aus filterndem Material angeordnet ist, beinhaltet; wobei die zweite Anordnung von Streifen (50) einen dritten Streifen (222) aus filterndem Material, einen vierten Streifen (23) aus filterndem Material und einen zweiten elastischen Streifen (27), der zwischen dem dritten Streifen (222) aus filterndem Material und dem vierten Streifen (23) aus filterndem Material angeordnet ist, beinhaltet, wobei der erste Streifen (21) aus filterndem Material, der zweite Streifen (22, 221) aus filterndem Material und der erste elastische Streifen (26) über dem vierten Streifen (23) aus filterndem Material, dem dritten Streifen (222) aus filterndem Material bzw. dem zweiten elastischen Streifen (27) liegen; dann
- Fixieren des ersten Streifens (21) aus filterndem Material an dem vierten Streifen (23) aus filterndem Material entlang einer ersten Schweißlinie (60);
- Fixieren des zweiten Streifens (22, 221) aus filterndem Material an dem dritten Streifen (222) aus filterndem Material entlang einer zweiten Schweißlinie (61); dann
- einen Schritt des Zuschneidens der ersten und zweiten Anordnungen von Streifen, um entgegengesetzt zueinander eine erste Maske und eine zweite Maske zu bilden, die jeweils eine Mittellinie (183) aufweisen, die der ersten Schweißlinie (60) und der zweiten Schweißlinie (61) entspricht, und Öffnungen (65, 165, 166), die dazu bestimmt sind, die Ohren des Benutzers aufzunehmen.

2. Verfahren zur Herstellung von Masken nach Anspruch 1, wobei die erste und die zweite übereinander liegende Anordnung von Streifen aus einer Anordnung von fünf Streifen (30) gebildet sind, beinhaltend den ersten Streifen (21) aus filterndem Material, einen mittleren Streifen (24) aus filterndem Material, der dazu bestimmt ist, den zweiten Streifen (22, 221) aus filterndem Material und den dritten Streifen (222) aus filterndem Material zu bilden, den vierten Streifen (23) aus filterndem Material, den ersten elastischen Streifen (26), der zwischen dem ersten Streifen (21) aus filterndem Material und dem mittleren Streifen (24) aus filterndem Material angeordnet ist, und den zweiten elastischen Streifen (27), der zwischen dem vierten Streifen (23) aus filterndem Material und dem mittleren Streifen (24) aus filterndem Material angeordnet ist, wobei die Anordnung aus fünf Streifen (30) entlang der Mitte (66) des mittleren Streifens (24) aus filterndem Material gefaltet wird, um den zweiten Streifen (22, 221) aus filterndem Material und den dritten Streifen (222) aus filterndem Material sowie die erste Anordnung (40) von Streifen und die zweite Anordnung von (50) Streifen, die übereinander liegen, zu bilden.

3. Verfahren zur Herstellung von Masken nach Anspruch 2, wobei der mittlere Streifen (24) aus filterndem Material eine Breite aufweist, die mindestens zwei Mal so groß wie der erste Streifen (21) aus filterndem Material ist.

4. Verfahren zur Herstellung von Masken nach Anspruch 1, wobei die erste und die zweite übereinander liegende Anordnung von Streifen aus zwei verschiedenen Anordnungen von Streifen gebildet sind, wobei die erste Anordnung von Streifen aus dem ersten Streifen (21) aus filterndem Material, dem zweiten Streifen (22) aus filterndem Material und dem ersten elastischen Streifen (26), der zwischen dem ersten Streifen (21) aus filterndem Material und dem zweiten Streifen (22) aus filterndem Material angeordnet ist, gebildet wird, wobei der erste Streifen (21) aus filterndem Material und der zweite Streifen (22) aus filterndem Material beidseits des ersten elastischen Streifens (26) fixiert sind, um die erste Anordnung von Streifen zu bilden, und wobei die zweite Anordnung von Streifen aus dem dritten Streifen (222) aus filterndem Material, dem vierten Streifen (23) aus filterndem Material und dem zweiten elastischen Streifen (27), der zwischen dem dritten Streifen (222) aus filterndem Material und dem vierten Streifen (23) aus filterndem Material angeordnet ist, gebildet wird, wobei der dritte Streifen (222) aus filterndem Material und der vierte Streifen (23) aus filterndem Material beidseits des zweiten elastischen Streifens (27) fixiert sind, um die zweite Anordnung von Streifen zu bilden.

5. Verfahren zur Herstellung von Masken nach einem der Ansprüche 1 bis 4, wobei mindestens ein Streifen, der unter dem ersten Streifen (21) aus filterndem Material, dem zweiten Streifen (22, 221) aus filterndem Material, dem dritten Streifen (222) aus filterndem Material, dem vierten Streifen (23) aus filterndem Material gewählt ist, mindestens zwei übereinander liegende Lagen, bevorzugt drei übereinander liegende Lagen, beinhaltet.

6. Verfahren zur Herstellung von Masken nach Anspruch 5, wobei ein Schritt des Verbindens vor dem Zuschneiden der ersten und zweiten Anordnungen von Streifen durchgeführt wird, um die mindestens zwei übereinander liegenden Lagen untereinander zu fixieren und über Verbindungsbereiche (70) zum einen einen ersten seitlichen Teil und einen zweiten seitlichen Teil der ersten Maske und zum anderen einen Teil der Öffnungen (65), die dazu bestimmt sind, die Ohren des Benutzers aufzunehmen, der zweiten Maske vorzuformen.

7. Verfahren zur Herstellung von Masken nach einem der Ansprüche 1 bis 6, wobei der erste elastische Streifen (26) und der zweite elastische Streifen (27) eine identische Breite aufweisen.

8. Verfahren zur Herstellung von Masken nach einem der Ansprüche 1 bis 7, wobei der erste elastische Streifen (26) und der zweite elastische Streifen (27) ein elastomeres Material beinhalten.

9. Verfahren zur Herstellung von Masken nach einem der Ansprüche 1 bis 8, wobei eine Rolle aus filterndem Material einen Hauptstreifen (20) aus filterndem Material bereitstellt, der eine Längsrichtung aufweist, und wobei der erste Streifen (21) aus filterndem Material, der mittlere Streifen (24) aus filterndem Material und der vierte Streifen (23) aus filterndem Material aus dem Hauptstreifen (20) aus filterndem Material über einen Zuschneideschritt entlang der Längsrichtung des Hauptstreifens (20) aus filterndem Material zugeschnitten werden.

10. Verfahren zur Herstellung von Masken nach einem der Ansprüche 1 bis 9, wobei eine Rolle aus elastischem Material einen Hauptstreifen aus elastischem Material bereitstellt, der eine Längsrichtung aufweist, und wobei der erste elastische Streifen (26) und der zweite elastische Streifen (27) aus dem Hauptstreifen aus elastischem Material über einen Zuschneideschritt entlang der Längsrichtung des Hauptstreifens aus elastischem Material zugeschnitten werden.

11. Verfahren zur Herstellung von Masken nach einem der vorhergehenden Ansprüche, wobei das Fixieren des ersten Streifens (21) aus filterndem Material an dem vierten Streifen (23) aus filterndem Material entlang der ersten Schweißlinie (60) und/oder das Fixieren des zweiten Streifens (22, 221) aus filterndem Material an dem dritten Streifen (222) aus filterndem Material entlang der zweiten Schweißlinie (61) durch ein Ultraschallschweißen erfolgt.

12. Verfahren zur Herstellung von Masken nach einem der vorhergehenden Ansprüche, wobei das Zuschneiden der ersten und zweiten Anordnungen von Streifen partiell ist, so dass nicht zugeschnittene Bereiche (34) gebildet werden, die es der ersten Maske und der zweiten Maske ermöglichen, verbunden zu sein.

13. Verfahren zur Herstellung von Masken nach Anspruch 12, wobei die nicht zugeschnittenen Bereiche (34) auf der ersten Schweißlinie (60) und der zweiten Schweißlinie (61) gelegen sind.

14. Verfahren zur Herstellung von Masken nach einem der Ansprüche 12 bis 13, wobei die nicht zugeschnittenen Bereiche (34) an Übergängen zwischen der ersten Schweißlinie (61) oder der zweiten Schweißlinie (61) und den Verbindungsbereichen (70) gelegen sind.

15. Verfahren zur Herstellung von Masken nach Anspruch 12 bis 14, wobei das Verfahren ferner einen Schritt des Aufrollens der ersten Maske und der zweiten Maske um eine Achse umfasst, um eine Rolle von abtrennbaren Masken zu bilden.

16. Maske, umfassend:
einen ersten seitlichen Teil (80), der eine erste Öffnung (165) umfasst, die dazu bestimmt ist, ein erstes Ohr eines Benutzers aufzunehmen,
einen zweiten seitlichen Teil (81), der eine zweite Öffnung (166) umfasst, die dazu bestimmt ist, ein zweites Ohr eines Benutzers aufzunehmen, und
einen mittleren Teil (82), der zwischen dem ersten seitlichen Teil (165) und dem zweiten seitlichen Teil (166) angeordnet ist, wobei der mittlere Teil (82) dazu bestimmt ist, die Nase und den Mund des Benutzers zu bedecken, wobei der mittlere Teil (82) eine Mittellinie (183) aufweist, wobei der mittlere Teil (82) aus filterndem Material hergestellt ist,
**dadurch gekennzeichnet, dass** der erste seitliche Teil (80) und der zweite seitliche Teil (81) jeweils aus einem ersten Bereich (126, 127) bestehen, der aus einem Streifen hervorgegangen ist, der aus einem elastischen Material besteht, und einem zweiten Bereich (121, 122), der aus einem Streifen hervorgegangen ist, der aus einem filternden Material besteht, wobei der erste Bereich (126, 127) zwischen dem mittleren Teil (82) und dem zweiten Bereich (121, 122) gelegen ist, wobei der zweite Bereich (121, 122) jeweils ein seitliches Ende der Maske (1) definiert,
wobei die erste Öffnung (165) und die zweite Öffnung (166) jeweils in dem ersten Bereich und dem zweiten Bereich zugeschnitten sind und rittlings zwischen dem ersten Bereich (126, 127) und dem zweiten Bereich (122, 121) gelegen sind.

## Claims

1. A facemask manufacturing process comprising:
- providing a first and a second assembly of strips superposed one on the other, **characterized in that** the first assembly of strips (40) comprises a first strip (21) of filtering material, a second strip (22, 221) of filtering material and a first elastic strip (26) interposed between the first strip (21) of filtering material and the second strip (22, 221) of filtering material; the second assembly of strips (50) comprising a third strip (222) of filtering material, a fourth strip (23) of filtering material and a second elastic strip (27) interposed between the third strip (222) of filtering material and the fourth strip (23) of filtering material, the first strip (21) of filtering material, the second strip (22, 221) of filtering material and the first elastic strip (26) being superposed on the fourth strip (23) of filtering material, the third strip (222) of filtering material and the second elastic strip (27), respectively; then
- fixing the first strip (21) of filtering material to the fourth strip (23) of filtering material along a first weld line (60);
- fixing the second strip (22, 221) of filtering material to the third strip (222) of filtering material along a second weld line (61); and then
- a step of cutting the first and second assemblies of strips in order to form, in a top-to-tail position, a first facemask and a second facemask respectively having a median line (183) corresponding to the first weld line (60) and to the second weld line (61) and orifices (65, 165, 166) intended for receiving the user's ears.

2. The facemask manufacturing process as claimed in claim 1, wherein the first and the second assembly of strips superposed one on the other are formed from an assembly of five strips (30) comprising the first strip (21) of filtering material, a central strip (24) of filtering material that is intended to form the second strip (22, 221) of filtering material and the third strip (222) of filtering material, the fourth strip (23) of filtering material, the first elastic strip (26) interposed between the first strip (21) of filtering material and the central strip (24) of filtering material, and the second elastic strip (27) interposed between the fourth strip (23) of filtering material and the central strip (24) of filtering material, wherein the assembly of five strips (30) is folded along the center (66) of the central strip (24) of filtering material in order to form said second strip (22, 221) of filtering material and said third strip (222) of filtering material and also the superposed first assembly (40) of strips and second assembly (50) of strips.

3. The facemask manufacturing process as claimed in claim 2, wherein the central strip (24) of filtering material has a width at least twice that of the first strip (21) of filtering material.

4. The facemask manufacturing process as claimed in claim 1, wherein the first and the second assembly of strips superposed one on the other are formed from two separate assemblies of strips, the first assembly of strips being respectively formed from the first strip (21) of filtering material, the second strip (22) of filtering material, and the first elastic strip (26) interposed between the first strip (21) of filtering material and the second strip (22) of filtering material, wherein the first strip (21) of filtering material and the second strip (22) of filtering material are fixed on either side of the first elastic strip (26) in order to form said first assembly of strips, and the second assembly of strips being respectively formed from the third strip (222) of filtering material, the fourth strip (23) of filtering material, and the second elastic strip (27) interposed between the third strip (222) of filtering material and the fourth strip (23) of filtering material, wherein the third strip (222) of filtering material and the fourth strip (23) of filtering material are fixed on either side of the second elastic strip (27) in order to form said second assembly of strips.

5. The facemask manufacturing process as claimed in one of claims 1 to 4, wherein at least one strip selected from the first strip (21) of filtering material, the second strip (22, 221) of filtering material, the third strip (222) of filtering material and the fourth strip (23) of filtering material has at least two superposed layers, preferably three superposed layers.

6. The facemask manufacturing process as claimed in claim 5, wherein a connecting step is performed upstream of the cutting of the first and second assemblies of strips in order to fix the at least two superposed layers to one another and to preform, via the connecting zones (70), both a first lateral part and a second lateral part of the first facemask and part of the orifices (65) of the second facemask that are intended to receive the user's ears.

7. The facemask manufacturing process as claimed in one of claims 1 to 6, wherein the first elastic strip (26) and the second elastic strip (27) have an identical width.

8. The facemask manufacturing process as claimed in one of claims 1 to 7, wherein the first elastic strip (26) and the second elastic strip (27) comprise an elastomer material.

9. The facemask manufacturing process as claimed in one of claims 1 to 8, wherein a roll of filtering material provides a main strip (20) of filtering material having a longitudinal direction, and wherein the first strip (21) of filtering material, the central strip (24) of filtering material and the fourth strip (23) of filtering material are cut out of the main strip (20) of filtering material via a step of cutting along the longitudinal direction of the main strip (20) of filtering material.

10. The facemask manufacturing process as claimed in one of claims 1 to 9, wherein a roll of elastic material provides a main strip of elastic material having a longitudinal direction, and wherein the first elastic strip (26) and the second elastic strip (27) are cut out of the main strip of elastic material via a step of cutting along the longitudinal direction of said main strip of elastic material.

11. The facemask manufacturing process as claimed in one of the preceding claims, wherein the fixing of the first strip (21) of filtering material to the fourth strip (23) of filtering material along the first weld line (60), and/or the fixing of the second strip (22, 221) of filtering material to the third strip (222) of filtering material along the second weld line (61), is performed by ultrasonic welding.

12. The facemask manufacturing process as claimed in one of the preceding claims, wherein the first and second assemblies of strips are partially cut, thereby forming non-cut zones (34) allowing the first facemask and the second facemask to be connected.

13. The facemask manufacturing process as claimed in claim 12, wherein the non-cut zones (34) are located on the first weld line (60) and the second weld line (61).

14. The facemask manufacturing process as claimed in either of claims 12 and 13, wherein the non-cut zones (34) are located at the joins between the first weld line (61) or the second weld line (61) and the connecting zones (70).

15. The facemask manufacturing process as claimed in claims 12 to 14, the process moreover comprising a step of winding up the first facemask and the second facemask about an axis in order to form a roll of detachable facemasks.

16. A facemask comprising:
a first lateral part (80) having a first orifice (165) intended to receive a user's first ear,
a second lateral part (81) having a second orifice (166) intended to receive the user's second ear, and
a central part (82) interposed between the first lateral part (165) and the second lateral part (166), the central part (82) being intended to cover the user's nose and mouth, the central part (82) having a median line (183), the central part (82) being manufactured from filtering material,
**characterized in that** the first lateral part (80) and the second lateral part (81) are each made up of a first zone (126, 127) provided from a strip composed of an elastic material and a second zone (121, 122) provided from a strip composed of a filtering material, wherein the first zone (126, 127) is located between the central part (82) and the second zone (121, 122), the second zones (121, 122) respectively defining one lateral end of the facemask (1),
wherein the first orifice (165) and the second orifice (166) are each cut out of the first zone and the second zone and located straddling the first zone (126, 127) and the second zone (122, 121).
